# EUROPEAN PATENT APPLICATION

(11) **EP 4 495 067 A1**
(43) Date of publication of application: **22.01.2025**
(21) Application number: 23770539.7
(22) Date of filing: 07.03.2023
(51) Int. Cl.: C01B 32/40

(54) **METHOD AND APPARATUS FOR PRODUCING SYNTHESIS GAS CONTAINING CARBON MONOXIDE**

(30) Priority: 15.03.2022 JP 2022039792
(71) Applicant: Kyushu University, National University Corporation, Nishi-ku Fukuoka-shi Fukuoka 819-0395 (JP)
(72) Inventor: ATTRI Pankaj, Fukuoka-shi, Fukuoka 819-0395 (JP); KOGA Kazunori, Fukuoka-shi, Fukuoka 819-0395 (JP); OKUMURA Takamasa, Fukuoka-shi, Fukuoka 819-0395 (JP); SHIRATANI Masaharu, Fukuoka-shi, Fukuoka 819-0395 (JP)
(74) Representative: TBK
(86) International application number: PCT/JP2023/008530
(87) International publication number: WO 2023/176583

(57) **Abstract**

It is a method comprising a carbon dioxide supplying step of supplying carbon dioxide to an ionic liquid, and a plasma irradiating step of irradiating plasma to the ionic liquid supplied with carbon dioxide to convert carbon dioxide to carbon monoxide.

## Description

### Technical Field

The present invention relates to a method for producing synthetic gas comprising carbon monoxide and production apparatus thereof.

### Background Art

According to the Report by the Energy Information Administration (EIA) of the US Department of Energy, it is reported that the world energy consumption amount will increase by 28% from 2015 to 2040, and it is reported that with the increase in the energy usage, the carbon dioxide (CO₂) emission associated with energy will increase by 16% over the same period, and the annual emission will increase from 339 hundred million tons in 2015 to 393 hundred million tons in 2040.

Converting carbon dioxide to generate sustainable carbonaceous fuel is the most promise option in dealing with greenhouse gas in the medium and short term. Further, carbon dioxide is expected as regenerable, having a low price, and rich C1 chemical raw material, to generate worthful chemical substances such as carbon monoxide (CO).

For example, as a technology for converting carbon dioxide to carbon monoxide, it is proposed to irradiate specific heat equilibrated plasma to carbon dioxide (see Patent Literature 1). Further, by using such plasma apparatus under optimum conditions, it is known that the net conversion rate from carbon dioxide to carbon monoxide attains almost 4%, but there was a problem that to further increase the conversion rate, high output is necessary, and the treating time becomes longer.

### Citation List

### Patent Literature

Patent Literature 1: Japanese Patent Laid-Open Publication No. 2013-252987

### Summary of Invention

### Technical Problem

The object of the present invention is to provide a method for efficiently convert carbon dioxide to carbon monoxide.

### Solution to Problem

The present inventors found that by irradiating plasma to carbon dioxide captured (dissolved) in ionic liquid, it is possible to efficiently convert carbon dioxide to carbon monoxide. Thus, the present invention has been completed.

Specifically, the present invention is as follows.
[1] A method for producing synthetic gas comprising carbon monoxide, the method comprising: a carbon dioxide supplying step of supplying carbon dioxide to an ionic liquid; and a plasma irradiating step of irradiating plasma to the ionic liquid supplied with carbon dioxide, to convert carbon dioxide to carbon monoxide.
[2] The method for producing synthetic gas comprising carbon monoxide according to [1], wherein supply of carbon dioxide to an ionic liquid in the carbon dioxide supplying step is a supply on a surface of ionic liquid.
[3] The method for producing synthetic gas comprising carbon monoxide according to [2], wherein supply of carbon dioxide to an ionic liquid in the carbon dioxide supplying step is a supply to an ionic liquid spread in a plane state.
[4] The method for producing synthetic gas comprising carbon monoxide according to [1], wherein supply of carbon dioxide to an ionic liquid in the carbon dioxide supplying step is a supply in the liquid of ionic liquid.
[5] The method for producing synthetic gas comprising carbon monoxide according to any one of [1] to [4], wherein irradiation of plasma in the plasma irradiation step is an irradiation to an ionic liquid spread in a plane state.
[6] The method for producing synthetic gas comprising carbon monoxide according to any one of [1] to [5], wherein the method comprises an ionic liquid heating step of heating the ionic liquid to clean the ionic liquid, after the plasma irradiation step.
[7] The method for producing synthetic gas comprising carbon monoxide according to [6], wherein the ionic liquid cleaned in the ionic liquid heating step is used again as an ionic liquid of the carbon dioxide supplying step.
[8] The method for producing synthetic gas comprising carbon monoxide according to any one of [1] to [7], wherein the ionic liquid is at least one type selected from 1-butyl-3-methylimidazolium acetate ([BMIM]AC), 1-butyl-2,3-dimethylimidazolium chloride ([BDMIM]Cl), 1-butyl-2,3-dimethylimidazolium tetrafluoroborate([BDMIM]BF₄), 1-ethyl-3-methylimidazolium acetate([EMIM]Ac), 1-methyl-3-n-octylimidazolium chloride([OMIM]Cl), and N,N-dimethyl carbamic acid dimethylammonium (DIMCARB).
[9] A production apparatus of synthetic gas comprising carbon monoxide, the apparatus comprising:
   a carbon dioxide supplying means of supplying carbon dioxide to an ionic liquid, and
   a plasma irradiating means of irradiating plasma to the ionic liquid supplied with carbon dioxide.
[10] The production apparatus of synthetic gas comprising carbon monoxide according to [9], wherein the production apparatus further comprises a heating means of performing heat treatment of the ionic liquid after plasma irradiation.

### Advantageous Effects of Invention

According to the production method of the present invention, it is possible to efficiently produce synthetic gas comprising carbon monoxide, by efficiently converting carbon dioxide to carbon monoxide.

### Brief Description of Drawing

Figure 1 is a figure explaining the production apparatus (continuous system) of synthetic gas of carbon monoxide according to a first embodiment of the present invention.
Figure 2 is a figure explaining the production apparatus (continuous system) of synthetic gas of carbon monoxide according to a second embodiment of the present invention.
Figure 3 is a figure explaining the apparatus used in Example 1.
Figure 4 is a photograph of the apparatus used in Example 1.
Figure 5 is a graph showing the concentration of the generated carbon monoxide, with respect to the ionic liquid concentration, when using 1-butyl-2,3-dimethylimidazolium chloride ([BDMIM]C1) as ionic liquid.
Figure 6 is a graph showing the concentration of the generated carbon monoxide, with respect to the ionic liquid concentration, when using N, N- dimethylammonium dimethyl carbamate (DIMCARB) as ionic liquid.
Figure 7 is a figure explaining the apparatus and procedures used in Example 2.

### Description of Embodiments

The method for producing synthetic gas comprising carbon monoxide of the present invention is characterized by comprising a carbon dioxide supplying step of supplying carbon dioxide to an ionic liquid; and a plasma irradiating step of irradiating plasma to the ionic liquid supplied with carbon dioxide, to convert carbon dioxide to carbon monoxide.

According to the production method of the present invention, it is possible to efficiently produce synthetic gas comprising carbon monoxide, by efficiently converting carbon dioxide to carbon monoxide. Further, since the production method of the present invention 1) can be performed at atomic pressure using low output plasma, 2) uses ionic liquid having a low price and that is reusable, and 3) can use carbon dioxide in air or discharged gas as raw material gas, it is possible to produce synthetic gas comprising carbon monoxide at a low price.

The synthetic gas comprising carbon monoxide produced by the method of the present invention can be used as it is, or can be used by separating carbon monoxide.

Next, each step of the production method of the present invention is explained in detail.

### [Carbon dioxide supplying step]

The carbon dioxide supplying step is a step of supplying carbon dioxide to an ionic liquid. The method of supplying carbon dioxide to an ionic liquid is not particularly limited as long as it is a method that allows the ionic liquid to capture (dissolve) carbon dioxide, and examples include a method of supplying carbon dioxide on the surface of an ionic liquid, and a method of supplying carbon dioxide in the liquid of ionic liquid. Specifically, as a method of supplying carbon dioxide on the surface of an ionic liquid, a method of placing an ionic liquid under carbon dioxide atmosphere or under gas flow of carbon dioxide to allow contact can be exemplified. Further, as a method of supplying carbon dioxide in the liquid of ionic liquid, a method of bubbling carbon dioxide in ionic liquid can be exemplified.

The temperature of ionic liquid when conferring carbon dioxide is sufficient to be a temperature at which ionic liquid is a liquid, and for example, it is preferably -40 to 100°C, more preferably 0 to 50°C.

Supply of carbon dioxide on the surface of an ionic liquid can be performed on the surface of an ionic liquid maintained to a prescribed height in a container, but from the viewpoint of supplying carbon dioxide more efficiently, it is preferable to perform supply to an ionic liquid spread in a plane state.

### (Ionic liquid)

The ionic liquid used in the production method of the present invention is not particularly limited as long as it consists of cation and anion, and is a salt which is in a liquid state at an ordinary temperature. It is preferably a salt whose melting point is 25°C or less, more preferably a salt of 10°C or less, and further preferably a salt of -20°C or less. The ionic liquid can be used alone, or by using 2 or more types in combination.

Examples of cation constituting ionic liquid include, for example, imidazolium ion shown by the following formula (1), pyridinium ion shown by formula (2), ammonium ion shown by formula (3), pyrrolidinium ion shown by formula (4), phosphonium ion shown by formula (5), sulphonium ion shown by formula (6), etc. Among these, imidazolium ion shown by formula (1) and ammonium ion shown by formula (3) are preferable.

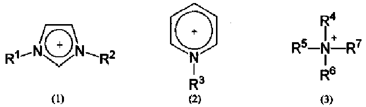

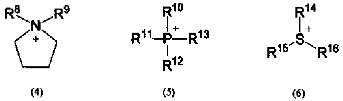

In formula (1), R¹ and R² are same or different, and show an optionally substituted alkyl group, or a hydrogen atom (with the proviso that R¹ and R² are not hydrogen atoms at the same time). The alkyl group is not particularly limited as long as cation can form ionic liquid. The alkyl group may be in a branched-chain or a straight-chain form, while it is preferable to be a straight-chain form. Examples of alkyl group include, for example, alkyl group having 1 to 8 carbons, preferably alkyl group having 1 to 4 carbons. More specifically, methyl group, ethyl group, propyl group, butyl group, pentyl group, hexyl group, heptyl group, and octyl group, etc. can be exemplified.

Specifically, 1-butyl-3-methylimidazolium ion, 1-butyl-2,3-dimethylimidazolium, 1-ethyl-3-methylimidazolium ion, 1-methyl-3-n-octylimidazolium can be exemplified.

In formula (2), R³ shows an optionally substituted alkyl group. The alkyl group is not particularly limited as long as cation can form ionic liquid. The alkyl group may be in a branched-chain or a straight-chain form, while it is preferable to be a straight-chain form. Examples of alkyl group include, for example, alkyl group having 1 to 5 carbons, preferably alkyl group having 1 to 3 carbons. More specifically, methyl group, ethyl group, propyl group, butyl group, and pentyl group, etc. can be exemplified.

In formula (3), R⁴ to R⁷ are same or different, and show an optionally substituted alkyl group, or a hydrogen atom (with the proviso that R⁴ to R⁷ are not hydrogen atoms at the same time). The alkyl group is not particularly limited as long as cation can form ionic liquid. The alkyl group may be in a branched-chain or a straight-chain form, while it is preferable to be a straight-chain form. Examples of alkyl group include, for example, alkyl group having 1 to 5 carbons, preferably alkyl group having 1 to 3 carbons. More specifically, methyl group, ethyl group, propyl group, butyl group, and pentyl group, etc. can be exemplified.

Specifically, dimethylammonium ion can be exemplified.

In formula (4), R⁸ and R⁹ are same or different, and show an optionally substituted alkyl group, or a hydrogen atom (with the proviso that R⁸ and R⁹ are not hydrogen atoms at the same time). The alkyl group is not particularly limited as long as cation can form ionic liquid. The alkyl group may be in a branched-chain or a straight-chain form, while it is preferable to be a straight-chain form. Examples of alkyl group include, for example, alkyl group having 1 to 8 carbons, preferably alkyl group having 1 to 6 carbons. More specifically, methyl group, ethyl group, propyl group, butyl group, pentyl group, hexyl group, heptyl group, and octyl group, etc. can be exemplified.

In formula (5), R¹⁰ to R¹³ are same or different, and show an optionally substituted alkyl group, or a hydrogen atom (with the proviso that R¹⁰ to R¹³ are not hydrogen atoms at the same time). The alkyl group is not particularly limited as long as cation can form ionic liquid. The alkyl group may be in a branched-chain or a straight-chain form, while it is preferable to be a straight-chain form. Examples of alkyl group include, for example, alkyl group having 1 to 5 carbons, preferably alkyl group having 1 to 3 carbons. More specifically, methyl group, ethyl group, propyl group, butyl group, and pentyl group, etc. can be exemplified.

In formula (6), R¹⁴ to R¹⁶ are same or different, and show an optionally substituted alkyl group, or a hydrogen atom (with the proviso that R¹⁴ to R¹⁶ are not hydrogen atoms at the same time). The alkyl group is not particularly limited as long as cation containing radically polymerizable group can form ionic liquid. The alkyl group may be in a branched-chain or a straight-chain form, while it is preferable to be a straight-chain form. Examples of alkyl group include, for example, alkyl group having 1 to 5 carbons, preferably alkyl group having 1 to 3 carbons. More specifically, methyl group, ethyl group, propyl group, butyl group, and pentyl group, etc. can be exemplified.

In formula (1) to (6), as substituents of alkyl group, for example, hydroxyl group, carbonyl group, methoxy group, amino group, carboxyl group, aryl group, radically polymerizable group can be exemplified. Further, instead of hydrogen atom, radically polymerizable group can be employed. As radically polymerizable group, it is not particularly limited as long as addition polymerization is possible by radical, and that cation containing radically polymerizable group can form ionic liquid. Specific examples of radically polymerizable group include vinyl group, allyl group, isopropenyl group, acryloyl group, methacryloyl group, and maleoyl group, etc. and preferably vinyl group, allyl group, and acryloyl group, etc. can be exemplified.

As anions constituting ionic liquid, organic carboxylic acid ion (for example, organic carboxylic acid ion having 1 to 8 carbons (preferably 2 to 4, more preferably 2 to 3), having one carboxy group), dialkyl carbamic acid ion, halide ion, dialkyl phosphate ion, tetrafluoroboric acid ion (BF₄⁻), BF₃CF₃⁻, BF₃C₂F₅⁻, BF₃C₃F₇⁻, BF₃C₄F₉⁻, hexafluorophosphoric acid ion (PF₆⁻), bis (trifluoromethanesulfonyl)imidic acid ion ((CF₃SO₂)₂N⁻), perchloric acid ion (ClO₄⁻), tris(trifluoromethanesulfonyl) carbon acid ion ((CF₃SO₂)₃C⁻), trifluoromethanesulfonic acid ion (CF₃SO₃⁻), dicyanamide ion ((CN)₂N⁻),trifluoroacetic acid ion (CF₃COO⁻), and amino acid derived ion, etc. can be exemplified.

Among these, organic carboxylic acid ion, dialkyl carbamic acid ion, halide ion, tetrafluoroboric acid ion (BF₄⁻) are preferable. Specifically, acetic acid ion, dimethyl carbamic acid ion, chloride ion, tetrafluoroboric acid ion (BF₄⁻) are preferable.

Specifically, as preferable ionic liquid, 1-butyl-3-methylimidazolium acetate ([BMIM]AC), 1-butyl-2,3-dimethylimidazolium chloride ([BDMIM]Cl), 1-butyl-2,3-dimethylimidazolium tetrafluoroborate([BDMIM]BF₄), 1-ethyl-3-methylimidazolium acetate([EMIM]Ac), 1-methyl-3-n-octylimidazolium chloride([OMIM]Cl), and N,N-dimethyl carbamic acid dimethylammonium (DIMCARB), etc. can be exemplified.

Ionic liquid can be produced according to a well-known method (for example, see Chem. Lett., 2000, page 922; J. Phys. Chem. B, 103, 1999, page 4164, etc.). In the present invention, ionic liquid produced according to a well-known method can be used, or a commercially available product can be used.

Ionic liquid can be used as it is, while it is preferable to use by dissolving in a solvent. Examples of solvent include for example water and various organic solvents, and water is preferable. Examples of organic solvents include for example alcohol, acetone, acetonitrile, benzene, toluene, etc. The solvent can be used alone, or by combining two or more types. The ionic liquid concentration is, preferably 1 to 100 mass%, more preferably 30 to 95 mass%, and further preferably 50 to 90 mass%.

### (Carbon dioxide)

As carbon dioxide used in the production method of the present invention is not particularly limited. It can be a pure carbon dioxide gas, and can be a mixed gas comprising other components. Specifically, as mixed gas, for example, air, or discharge gas generated at facilities such as factory, waste processing facility, thermal plant, etc. can be exemplified.

### [Plasma irradiating step]

Plasma irradiating step is a step of irradiating plasma to the ionic liquid supplied with carbon dioxide in the above carbon dioxide supplying step, to convert carbon dioxide to carbon monoxide. In this step by the synergy of ionic liquid and plasma, carbon dioxide is efficiently converted to carbon monoxide.

The plasma generating apparatus used in the plasma irradiating step of the present invention is not particularly limited, and a conventionally well-known plasma generating apparatus can be used.

The plasma discharging system is not particularly limited, and non-equilibrium plasma discharging system such as RF discharge, corona discharge, derivative barrier discharge, microwave discharge, etc., and thermal equilibrium plasma discharging system such as arc discharge, etc. can be exemplified. Examples of plasma irradiation pattern include remote plasma, direct plasma, spot plasma, etc.

Plasma gas (process gas) is not particularly limited, and examples include air, nitrogen gas, halogen containing gas, oxygen gas, hydrogen gas, etc. It is possible to use by mixing these gasses. In the present invention, air plasma or nitrogen gas plasma (N₂ plasma) is preferable. It is preferable to purge the space in which plasma gas is contained with plasma gas in advance, before plasma irradiation. The flow rate of plasma gas can be appropriately determined from the distance between electrodes, cross section area and length of gas distribution surface in the discharge field, frequency of high frequency wave to be applied, composition of plasma gas, etc.

Plasma irradiation in the plasma irradiating step of the present invention can be low pressure plasma irradiation or atmospheric pressure plasma irradiation. The pressure range is for example 0.001 to 1.0 × 10⁸ Pa, preferably 0.01 to 1 × 10⁷ Pa, more preferably 0.1 to 1 × 10⁶ Pa. Further, as for plasma irradiating time, it is for example 1 to 6000 sec., preferably 10 to 1000 sec., more preferably 20 to 500 sec., and further preferably 30 to 200 sec.

Plasma irradiation to ionic liquid can be a local plasma irradiation, while it is preferable to be a plasma irradiation to a wide range. For example, by performing plasma irradiation to a wide range of ionic liquid, in which carbon dioxide is dissolved, and being spread in a plane state, it is possible to efficiently convert a large amount of carbon dioxide to carbon monoxide. Further, as ionic liquid in which carbon dioxide is dissolved, and being spread in a plane state can be one to which carbon dioxide has been supplied in a state being spread in a plane state, or one that has been spread in a plane state, after being supplied with carbon dioxide.

### [Ionic liquid heating step]

The production method of the present invention preferably comprises an ionic liquid heating step of heating the ionic liquid to clean the ionic liquid, after the plasma irradiating step. By the present step, various gasses generated in the plasma irradiating step are separated from the ionic liquid, to become a clean ionic liquid, and carbon dioxide absorption property would be regenerated. The regenerated ionic liquid can be reused for carbon dioxide supply in the present invention.

### [Other steps]

The production method of the present invention can comprise, other than the above-mentioned steps, a step of purifying ionic liquid, a step of purifying carbon dioxide, etc.

### [Estimated reaction of the present invention]

The present inventors estimate that when irradiating plasma to carbon dioxide dissolved in water, while reactions such as in the following

10CO₂+nH₂O → 2CO₂....H₂O+8CO₂(gas)+(n-1)H₂O

2CO₂....H₂O+ Plasma → CO + CO₂....H₂O+ X (species, like H2O2, HCHO, CH3OH....)

progress, by using ionic liquid as in the present invention, reactions such as in the following

10CO₂+ nH₂O + ylL (ionicliquid) → 10CO₂....ylL...H₂O

10CO₂....ylL...H₂O+ Plasma → 6-8CO + 2CO₂....ylL...H₂O+ X (species, like H2O2, HCHO, CH3OH....)

progress, and the conversion from carbon dioxide to carbon monoxide is efficiently performed.

Specifically, when using 1-butyl-3-methylimidazolium acetate ([BMIM]AC) as ionic liquid, it is estimated that the reaction shown in the following progresses.

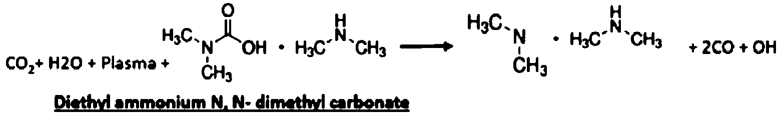

Further, when using N,N-dimethyl carbamic acid dimethylammonium (DIMCARB) as ionic liquid, it is estimated that the reaction shown in the following progresses.

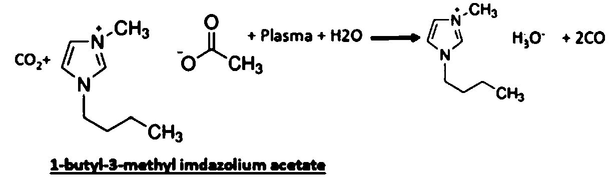

The above-mentioned reaction is an estimation of the present inventors, and does not limit the scope of the present invention.

Next, the production apparatus of the present invention will be explained.
The production apparatus of synthetic gas comprising carbon monoxide of the present invention is characterized by comprising a carbon dioxide supplying means for supplying carbon dioxide to ionic liquid, and a plasma irradiating means for irradiating plasma to ionic liquid supplied with carbon dioxide. The production apparatus of the present invention can be used to perform the method for producing synthetic gas comprising carbon monoxide of the present invention.

The carbon dioxide supplying means is not particularly limited as long as it can supply carbon dioxide to ionic liquid, and for example, means for supplying carbon dioxide on the surface of ionic liquid, and means for supplying carbon dioxide in the liquid of ionic liquid can be exemplified.

Examples of means for supplying carbon dioxide on the surface of an ionic liquid specifically include a carbon dioxide supplying apparatus that allows gas comprising carbon dioxide to be distributed through the surface of an ionic liquid. Further, examples of means for supplying carbon dioxide in the liquid of ionic liquid include a bubbling apparatus of bubbling gas comprising carbon dioxide in the ionic liquid.

As plasma irradiating means, conventionally well-known apparatus can be used. Specifically, an apparatus that can perform plasma irradiation, as explained in the above-mentioned production method of the present invention can be exemplified. For example, a means for irradiating plasma (remote form) to ionic liquid by inducing discharge generated between a pair of electrodes to the ionic liquid with process gas, the means comprising a pair of electrodes, a dielectric body provided on at least one surface opposing to the pair of electrodes, and a high-frequency power source that applies electrical voltage between the pair of electrodes.

Further, the production apparatus of synthetic gas comprising carbon monoxide of the present invention preferably comprises a heating means of performing heat treatment to ionic liquid after plasma irradiation. Thereby, the carbon dioxide absorption property of ionic liquid can be regenerated, and reuse of ionic liquid would be possible.

The production apparatus of synthetic gas comprising carbon monoxide of the present invention can be one that performs supply of carbon dioxide and plasma irradiation to ionic liquid stored in a storage tank, etc.by batch format, or can be one that performs supply of carbon dioxide and plasma irradiation to distributing ionic liquid by a continuous method, while a continuous method is preferable.

Specifically, as an apparatus that performs batch treatment, for example an ionic liquid storage tank comprising a carbon dioxide supplying means and a plasma irradiating means can be exemplified. Further, as an apparatus that performs continuous treatment, one comprising a first tank comprising a carbon dioxide supplying means, and a second tank connected to the first tank, and comprising a plasma irradiating means, wherein the apparatus preforms distribution treatment of the ionic liquid that is continuously supplied from the first tank to the second tank can be exemplified. Further, as an apparatus that performs continuous treatment, one comprising a plasma irradiating means wherein an electrode bar connected to a high-frequency power source is inserted in a dielectric tube (for example, glass tube) which surrounding is covered with an electrode material, an ionic liquid supplying means that supplies ionic liquid along the dielectric tube inner wall, and a carbon dioxide supplying means that distributes carbon dioxide in the dielectric tube can be exemplified.

In the following, one embodiment of the production apparatus of synthetic gas of carbon monoxide of the present invention will be explained in detail by referring to the drawings, while the present invention shall not be limited to this embodiment.

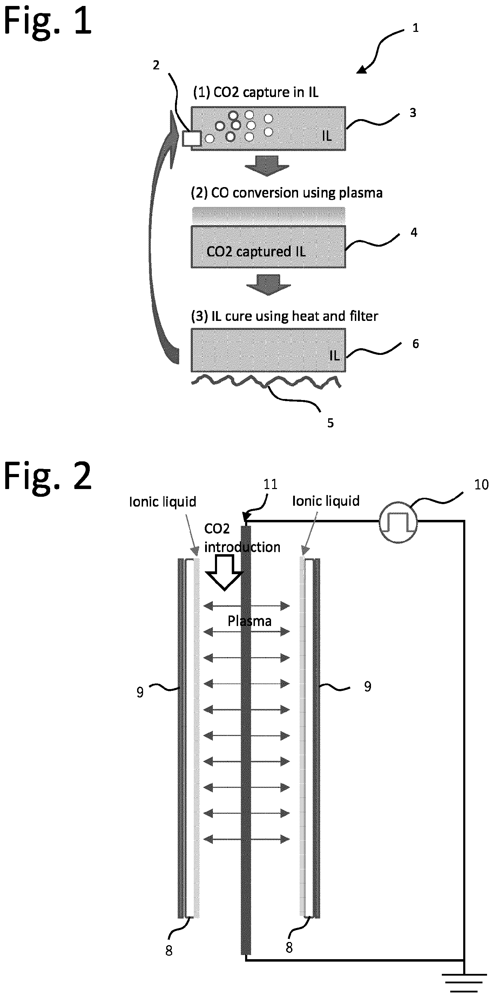

Here, Fig. 1 is a figure explaining the production apparatus (continuous system) of synthetic gas of carbon monoxide according to a first embodiment of the present invention. Fig. 2 is a figure explaining the production apparatus (continuous system) of synthetic gas of carbon monoxide according to a second embodiment of the present invention.

As shown in Fig. 1, the production apparatus 1 of synthetic gas comprising carbon monoxide according to a first embodiment of the present invention comprises a first tank 3 comprising a bubbling apparatus 2 as a carbon dioxide supplying means; a second tank 4 connected to the first tank 3, and comprising a plasma irradiating means that irradiates plasma to the ionic liquid that has flowed in from the first tank 3; and a third tank 6 connected to the second tank 4, and comprising a heat treating means 5 that performs heat treatment to the ionic liquid that has flowed in from the second tank 4. Further, the third tank 6 is also connected to the first tank 3, and the ionic liquid which has been subjected to heat treatment in the third tank 6 is sent to the first tank 3, so that the ionic liquid can circulate and distributed. The production apparatus 1 can continuously produce carbon monoxide by circulating and distributing the ionic liquid.

Further, the above-mentioned production apparatus 1 of synthetic gas comprising carbon monoxide according to a first embodiment of the present invention performs continuous treatment by circulating the ionic liquid to the first tank 3, second tank 4, third tank 6, while it can be a batch format apparatus in which the first tank 3, second tank 4, third tank 6 are made to be a single tank comprising a carbon dioxide supplying means, plasma irradiating means, and heat treatment means.

As shown Fig. 2, the production apparatus 7 of synthetic gas comprising carbon monoxide according to a second embodiment of the present invention comprises a plasma irradiating means comprising a glass tube 8 as a dielectric tube provided upright; a metal sheet 9 as electrode in sheet-state covering the glass tube 8; a metal rod 11 as a rod-shaped electrode, connected to a high-frequency power source (high voltage pulse power supply) 10, and being inserted to the glass tube 8. Further, the production apparatus 7 comprises an ionic liquid supplying means that supply the ionic liquid from the upper part along the inner wall of the glass tube 8; and a carbon dioxide supplying means that distributes carbon dioxide from the upper part to the inside of the glass tube 8.

The carbon dioxide supplying means supplies carbon dioxide to the ionic liquid that flows the inner wall of the glass tube 8, which liquid has been supplied by the ionic liquid supplying means. Further, the plasma irradiating means discharges plasma from the metal rod 11 toward the metal sheet 9, and irradiates plasma to the ionic liquid that flows the inner wall of the glass tube 8, which liquid has been supplied with carbon dioxide. Thereby, the production apparatus 7 can continuously produce carbon monoxide.

### Examples

### [Example 1]

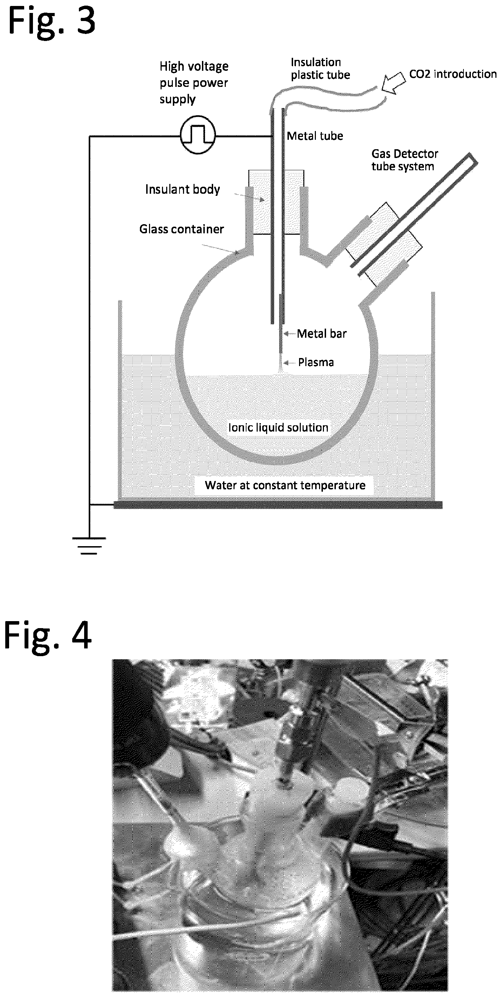

By using the apparatus shown in Fig. 3, conversion test from carbon dioxide to carbon monoxide was performed.

The present test is to supply carbon dioxide on the surface of an ionic liquid by introducing carbon dioxide in the container storing the ionic liquid (IL), and to irradiate plasma to the ionic liquid, to synthesize carbon monoxide from carbon dioxide.

Specifically, the test was performed under the conditions shown in the following.

### <Conditions>

- Ionic liquid (IL)
   (1) 1-butyl-3-methylimidazolium chloride ([BMIM]Cl)
   (2) N, N- dimethylammonium dimethylcarbamate (DIMCARB)
- IL concentration: 0-80 wt%
- gas: CO₂
- gas flow rate: 300 sccm
- temperature: ordinary temperature
- plasma generating power source: PVM500 (manufactured by Information Unlimited)
- input power: 10 -12 W
- applied frequency, applied voltage: 24 - 25 kHz, 6-7 kVpp
- treatment time: 4 min.
- CO detector: Gas Detector tube system, manufactured by Gastec (Tube No.: 1HH)

### <Result 1: In case of using [BMIM]Cl as ionic liquid>

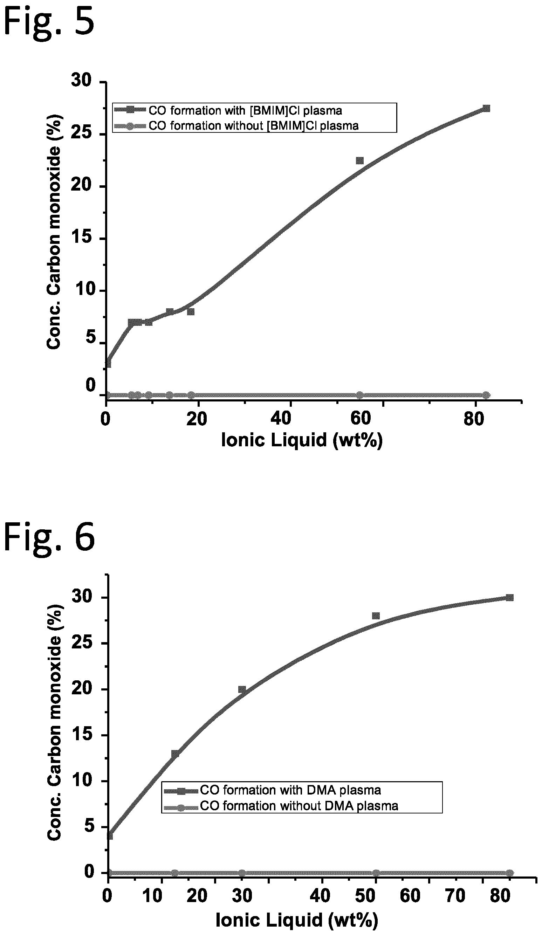

Fig. 5 shows the concentration of the generated carbon monoxide with respect to the ionic liquid concentration. As shown in Fig. 5, with the increase of the ionic liquid concentration, the carbon monoxide concentration increases, and with an ionic liquid concentration of 80 wt%, the carbon monoxide concentration increased to about 30%.

On the other hand, in case of not using ionic liquid, and using only water (ionic liquid 0 wt%), the carbon monoxide concentration was low as about 3%. Further, when not performing plasma irradiation (circle in Fig. 5) no carbon monoxide generation was observed.

### <Result 2: In case of using DIMCARB as ionic liquid>

Fig. 6 shows the concentration of the generated carbon monoxide with respect to the ionic liquid concentration. As shown in Fig. 6, the carbon monoxide concentration increases, and with an ionic liquid concentration of 80 wt%, the carbon monoxide concentration increased to about 30%.

On the other hand, in case of not using ionic liquid, and using only water (ionic liquid 0 wt%), the carbon monoxide concentration was low as about 3%. Further, when not performing plasma irradiation (circle in Fig. 6) no carbon monoxide generation was observed.

Since introduction of carbon dioxide and plasma irradiation are performed at about the same time, it is thought that conversion to carbon monoxide was promoted by the synergy of plasma on the surface of ionic liquid solution, and ionic liquid.

### [Example 2]

In the present test, in the liquid of ionic liquid at a predetermined concentration in the container, carbon dioxide gas was supplied (bubbling), allowed to stand still for a certain period, plasma was irradiated to the ionic liquid, to convert carbon dioxide to carbon monoxide.

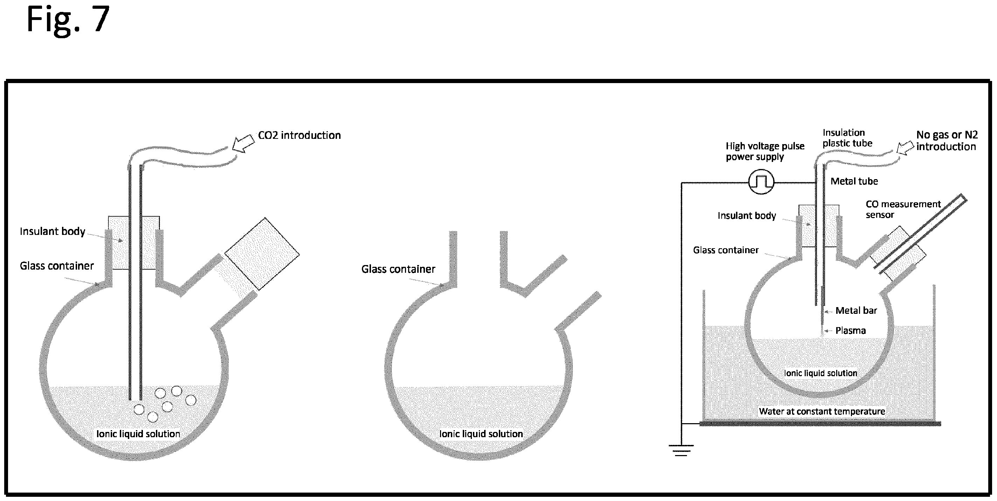

The summary of the test is shown in Fig. 7 and the test was performed by the following procedures 1) to 3).
1) To the ionic liquid, bubbling was performed for 2 min. with carbon dioxide (left figure of Fig. 7).
   The flow rate of carbon dioxide was 300 sccm, and during bubbling, a cap was gently put to the bottle.
2) After bubbling, to confirm carbon dioxide capturing ability, it was stored for 24 hours (center figure of Fig. 7). The storing temperature was 20°C.
3) After storing for 24 hours, plasma irradiation was performed to the ionic liquid (right figure of Fig. 7). Discharge parameters were performed with similar conditions as Example 1.

First, [BMIM]Cl was used as ionic liquid, and the concentration dependence property was investigated.

Specifically, as ionic liquid, [BMIM]Cl of 4 wt%, 12 wt%, 20 wt% was used, and after bubbling with carbon dioxide for 2 min,. it was stored for 24 hours. The concentration of carbon dioxide in the ionic liquid after 24 hours was measured by using sensor CGP-31 (manufactured by DKK-TOA CORPORATION). Further, to the ionic liquid that has been stored for 24 hours, air plasma was irradiated for 1 min. and the carbon monoxide concentration was measured. As comparison, water (ionic liquid 0 wt%) was used.

The results are shown in Table 1.

**[Table 1]**

| Ionic liquid concentration | CO₂ concentration in solution after CO₂ bubbling | CO concentration in gas phase |
|---|---|---|
| | 24 hours after | Amount of generated CO by air plasma treatment 24 hours after bubbling |
| Water (IL= 0wt%) | 9 mg/L | 0.22-0.33 mg/L |
| IL solution (50 ml solution added with 2 g ionic liquid) (IL= 4 wt%) | 310 mg/L | 0.90 mg/L |
| IL solution (50 ml solution added with 6 g ionic liquid) (IL= 12 wt%) | 330 mg/L | 0.90 mg/L |
| IL solution (50 ml solution added with 10 g ionic liquid) (IL= 20 wt%) | 370 mg/L | Measurable limit or more (>1000ppm, >1.16mg/L) |

As shown in Table 1, as the ionic liquid concentration increases, the carbon dioxide capturing ability increases, and the conversion amount to carbon monoxide tends to be higher. On the other hand, carbon dioxide capturing ability of water was low, and 24 hours after, it decreased to about 1% of the initial carbon dioxide concentration in liquid.

Next, by using various types of ionic liquid such as [BMIM]Ac, [BDMIM]Cl, [BDMIM]BF₄, [BMIM]Ac, [DIMCARB], [OMIM]Cl as ionic liquid (IL), similar test as above was performed. The storage period after supplying carbon dioxide was set to be 4 days or 10 days.

The results are shown in Table 2.

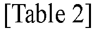

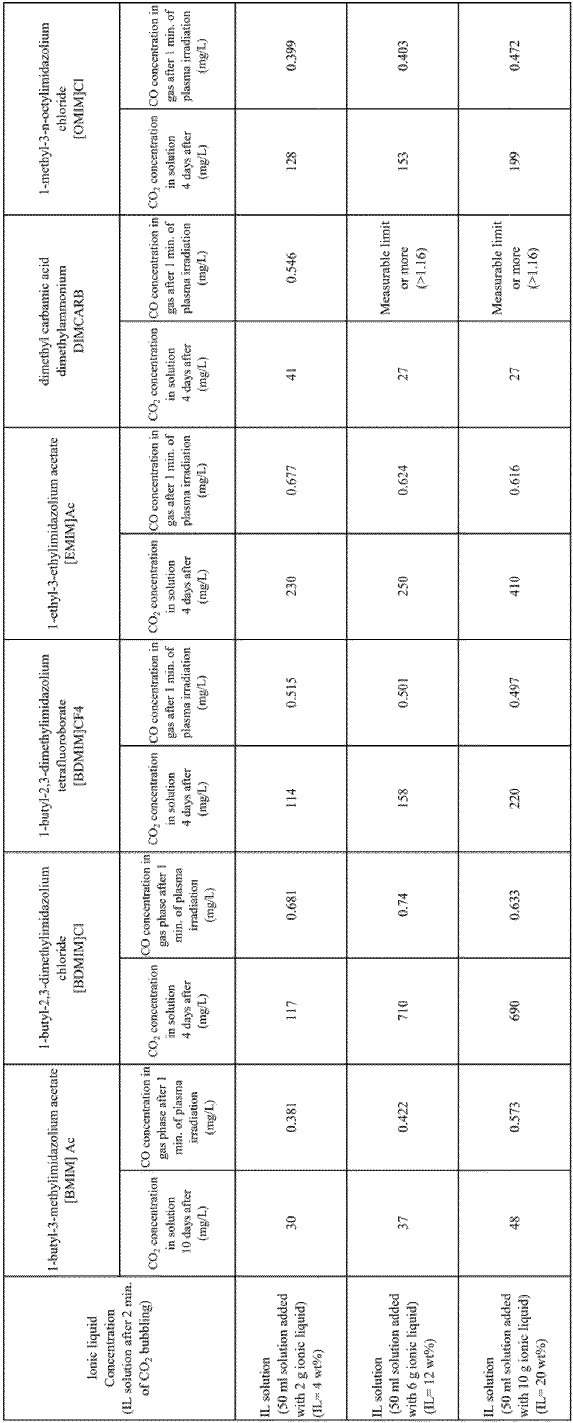

As shown in Table 2, it has been revealed that, conversion to carbon monoxide is efficiently performed by using any ion liquid.

### [Example 3]

In the above Example 2, plasma irradiation was performed under air atmosphere, while in the present Example, plasma irradiation was performed under nitrogen atmosphere.

Specifically, DIMCARB was used as ionic liquid, and after bubbling with carbon dioxide for 2 min,. it was stored for 4 days. The concentration of carbon dioxide in the ionic liquid after 4 days was measured by using sensor CGP-31 (manufactured by DKK-TOA CORPORATION). Further, to the ionic liquid to which parge treatment with nitrogen was performed for 4 min, and stored for 4 days, N₂ plasma was irradiated for 1 min. and the concentration of the generated carbon monoxide was measured. As comparison, water (ionic liquid 0 wt%) was used.

The results are shown in Table 3.

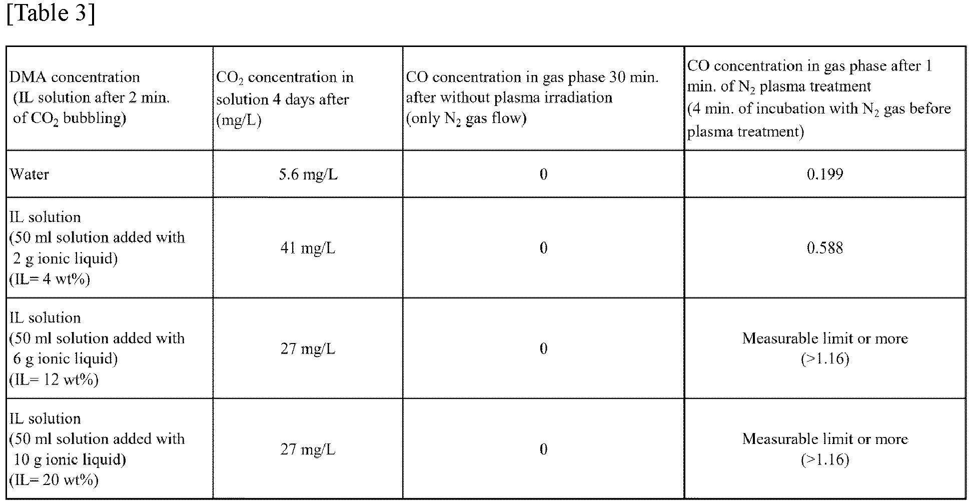

As shown in table 3, even in case of nitrogen plasma, equivalent results as for air plasma (Table 2) were obtained. Therefore, it is thought that there is no influence of carbon dioxide in air.

### Industrial Applicability

Since the present invention can produce carbon monoxide being useful chemical raw material, it is an industrially applicable invention.

### Reference Signs List

1 Production apparatus of synthetic gas comprising carbon monoxide (first embodiment)
2 Bubbling apparatus
3 first tank
4 second tank
5 heat treating means
6 third tank
7 Production apparatus of synthetic gas comprising carbon monoxide (second embodiment)
8 glass tube (dielectric body)
9 metal sheet (electrode in sheet state)
10 high-frequency power source
11 metal bar (electrode in bar state)

## Claims

1. A method for producing synthetic gas comprising carbon monoxide, the method comprising
a carbon dioxide supplying step of supplying carbon dioxide to an ionic liquid; and
a plasma irradiating step of irradiating plasma to the ionic liquid supplied with carbon dioxide, to convert carbon dioxide to carbon monoxide.

2. The method for producing synthetic gas comprising carbon monoxide according to claim 1, wherein supply of carbon dioxide to an ionic liquid in the carbon dioxide supplying step is a supply on a surface of ionic liquid.

3. The method for producing synthetic gas comprising carbon monoxide according to claim 2, wherein supply of carbon dioxide to an ionic liquid in the carbon dioxide supplying step is a supply to an ionic liquid spread in a plane state.

4. The method for producing synthetic gas comprising carbon monoxide according to claim 1, wherein supply of carbon dioxide to an ionic liquid in the carbon dioxide supplying step is a supply in the liquid of ionic liquid.

5. The method for producing synthetic gas comprising carbon monoxide according to any one of claims 1 to 4, wherein irradiation of plasma in the plasma irradiation step is an irradiation to an ionic liquid spread in a plane state.

6. The method for producing synthetic gas comprising carbon monoxide according to any one of claims 1 to 5, wherein the method comprises an ionic liquid heating step of heating the ionic liquid to clean the ionic liquid, after the plasma irradiation step.

7. The method for producing synthetic gas comprising carbon monoxide according to claim 6, wherein the ionic liquid cleaned in the ionic liquid heating step is used again as an ionic liquid of the carbon dioxide supplying step.

8. The method for producing synthetic gas comprising carbon monoxide according to any one of claims 1 to 7, wherein the ionic liquid is at least one type selected from 1-butyl-3-methylimidazolium acetate ([BMIM]AC), 1-butyl-2,3-dimethylimidazolium chloride ([BDMIM]Cl), 1-butyl-2,3-dimethylimidazolium tetrafluoroborate([BDMIM]BF₄), 1-ethyl-3-methylimidazolium acetate([EMIM]Ac), 1-methyl-3-n-octylimidazolium chloride([OMIM]Cl), and N,N-dimethyl carbamic acid dimethylammonium (DIMCARB).

9. A production apparatus of synthetic gas comprising carbon monoxide, the apparatus comprising
a carbon dioxide supplying means of supplying carbon dioxide to an ionic liquid, and
a plasma irradiating means of irradiating plasma to the ionic liquid supplied with carbon dioxide.

10. The production apparatus of synthetic gas comprising carbon monoxide according to claim 9, wherein the production apparatus further comprises a heating means of performing heat treatment of the ionic liquid after plasma irradiation.
